# EUROPEAN PATENT APPLICATION

(11) **EP 4 801 108 A1**
(43) Date of publication of application: **02.09.2026**
(21) Application number: 24911127.9
(22) Date of filing: 24.12.2024
(51) Int. Cl.: H04W 36/00

(54) **COMMUNICATION METHOD AND APPARATUS**

(30) Priority: 29.12.2023 CN 202311867129
(71) Applicant: Huawei Technologies Co., Ltd., Shenzhen, Guangdong 518129 (CN)
(72) Inventor: FAN, Qiang, Shenzhen, Guangdong 518129 (CN); YOU, Chunhua, Shenzhen, Guangdong 518129 (CN); HAN, Feng, Shenzhen, Guangdong 518129 (CN)
(74) Representative: Epping - Hermann - Fischer
(86) International application number: PCT/CN2024/141888
(87) International publication number: WO 2025/140202

(57) **Abstract**

This application provides a communication method and an apparatus, relating to the field of communication technologies. The method includes: a first network device sends first information to a terminal device interested in clock-related information, where the first information indicates an RNA, and the RNA includes a coverage area of the first network device and a coverage area of a second network device; and the first network device sends second information to the second network device, where the second information indicates that the second network device sends the clock-related information within the coverage area of the second network device. In cases where the RNA maintained by the anchor base station for terminal devices interested in clock-related information includes the coverage areas of other neighboring base station, the anchor gNB may send second information to these neighboring base station. The neighboring base station can then transmit the clock-related information based on this second information. This prevents applications requiring clock synchronization from malfunctioning due to an inability to obtain the information in a timely manner, thereby ensuring the service continuity of clock-related services.

## Description

This application claims priority to Chinese Patent Application No. 202311867129.8, filed with the China National Intellectual Property Administration on December 29, 2023, and entitled "Communication Method and Apparatus," which is incorporated herein by reference in its entirety.

### TECHNICAL FIELD

This application relates to the field of communication technologies, and in particular, to a communication method and apparatus.

### BACKGROUND

The 3^{rd} generation partnership project (3^{rd} generation partnership project, 3GPP) standardization organization defines the 5^{th} generation (5^{th} generation, 5G) system, which supports a resume request (ResumeRequest) message, where an RRC resume request message carries an I-RNTI of a UE. Currently, a base station air interface high-precision timing service (i.e., the network device may provide a 5G high-precision time to the terminal device through an air interface message) is used to implement high-precision time synchronization between the terminal device and the network device. However, after the terminal device moves from a coverage area of one network device to a coverage area of another network device, the another network device cannot effectively provide clock-related information, and therefore an application that needs the clock-related information cannot function properly because the clock-related information cannot be obtained in a timely manner.

Therefore, how to ensure continuity of clock-related services is an urgent problem to be resolved.

### SUMMARY

This application provides a communication method and apparatus that can ensure the continuity of clock-related services.

According to a first aspect, a communication method is provided, comprising: a first network device sends first information to a terminal device interested in clock-related information, where the first information indicates a radio access network notification area (radio access network notification area, RNA), and the RNA includes a coverage area of the first network device and a coverage area of a second network device; and the first network device sends second information to the second network device, where the second information instructs the second network device to send the clock-related information within the coverage area of the second network device.

The method may be performed by the first network device, or by a component (such as a processor, chip, or chip system, etc.) in the first network device, or by logical modules or software capable of implementing all or a part of the functions of the first network device. For example, the first network element device may be referred to as an anchor (anchor) network device, a last serving (last serving) network device accessed by the terminal device, or may have other names.

According to the foregoing embodiment, when the RNA of the terminal device that is interested in the clock-related information and is maintained by the anchor base station includes the coverage of a neighboring base station, the anchor base station may send the second information to the neighboring base station. The neighboring base station may then send the clock-related information based on the second information, thereby enabling the terminal device to receive the clock-related information within the coverage of the neighboring base station. This prevents applications that require the clock-related information from being unable to function properly due to the inability to obtain the clock-related information in a timely manner, thereby ensuring the continuity of clock-related services.

With reference to the first aspect, in some implementations of the first aspect, the second information includes an identifier of the first network device, and/or an identifier of the coverage area of the second network device, where the identifier of the first network device is used to indicate that the coverage area of the second network device corresponds to the first network device.

Through the foregoing embodiment, the second network device may determine the source of the second information based on the second information. Alternatively, the second network device may determine, based on the second information, to send clock-related information within the coverage area of the second network device, thereby ensuring the continuity of clock-related services for terminal devices within the coverage area of the second network device.

With reference to the first aspect, in some implementations of the first aspect, the first information is further used to release the terminal device, so that the terminal device enters an inactive state.

With reference to the first aspect, in some implementations of the first aspect, the method further includes: the first network device sends third information to the second network device, where the third information is used to indicate that the second network device does not send the clock-related information within the coverage area of the second network device.

According to the foregoing embodiment, when the anchor base station does not include the coverage area of a neighboring base station in the RNA of the terminal device that the anchor base station maintains and that is interested in the clock-related information, the anchor base station may send third information to the neighboring base station. The third information may indicate that the second network device does not send the clock-related information within the coverage area of the second network device, thereby saving overhead.

With reference to the first aspect, in some implementations of the first aspect, the third information includes an identifier of the first network device, and/or an identifier of the coverage area of the second network device.

According to the foregoing embodiment, the second network device may determine the source of the third information based on the third information, so as to determine whether to stop sending the clock-related information in the coverage area of the second network device. Alternatively, the second network device may determine, based on the third information, to stop sending the clock-related information in the coverage area of the second network device, thereby reducing overheads.

With reference to the first aspect, in some implementations of the first aspect, the first network device sends the third information to the second network device includes: after the terminal device enters the connected state or the idle state, or after the first network device deletes or migrates the context of the terminal device, or after the first network device learns that the terminal device is within the coverage area of the first network device, the first network device sends the third information to the second network device.

With reference to the first aspect, in some implementations of the first aspect, the method further includes: the first network device determines that the terminal device is within the coverage area of the first network device, based on at least one of the following: performing, by the first network device, small data transmission with the terminal device; or receiving, by the first network device, location information of the terminal device, where the location information indicates that the terminal device is within the coverage area of the first network device.

With reference to the first aspect, in some implementations of the first aspect, the first network device sends the second information to the second network device includes: after the first network device terminates the small data transmission of the terminal device, the first network device sends the second information to the second network device.

According to a second aspect, a communication method is provided, including: a second network device receives second information from a first network device, where the second information is used to indicate the second network device to send clock-related information within the coverage area of the second network device in an RNA; and the second network device sends the clock-related information based on the second information.

The method may be performed by a second network device, or may be performed by a component (for example, a processor, a chip, or a chip system) in the second network device, or may be performed by a logical module or software that can implement all or some of the functions of the second network device.

With reference to the second aspect, in some implementations of the second aspect, the second information includes an identifier of the first network device and/or an identifier of the coverage area of the second network device in the RNA, where the identifier of the first network device is used to indicate that the coverage area of the second network device corresponds to the first network device.

With reference to the second aspect, in some implementations of the second aspect, the second network device sends the clock-related information based on the second information includes: the second network device sends the clock-related information within the coverage area of the second network device in the notification area.

With reference to the second aspect, in some implementations of the second aspect, the method further includes: the second network device receives third information from the first network device, where the third information is used to indicate that the second network device does not send the clock-related information within the coverage area of the second network device in the RNA.

With reference to the second aspect, in some implementations of the second aspect, the third information includes an identifier of the first network device, and/or an identifier of the coverage area of the second network device in the RNA.

With reference to the second aspect, in some implementations of the second aspect, the method further includes: the second network device determines, based on the third information, whether to send the clock-related information within the coverage area of the second network device in the RNA.

According to the foregoing embodiment, the second network device may flexibly determine, based on the third information, whether to send the clock-related information in the coverage area of the second network device in the RNA, thereby ensuring continuity of a clock-related service of a terminal device in an RNA that includes the coverage area of the second network device, or reducing overheads.

With reference to the second aspect, in some implementations of the second aspect, the second network device receives the second information from the first network device includes: the second network device receives N pieces of the second information from N first network devices, where N is a positive integer; and the second network device receives the third information from the first network device includes: the second network device receives M pieces of the third information from M first network devices, where M is a positive integer, and the M first network devices belong to the N first network devices; where the second network device determines whether to send the clock-related information in the coverage area of the second network device in the RNA based on the third information includes: when M is equal to N, the second network device does not send the clock-related information in the coverage area of the second network device in the RNA based on the third information.

According to the foregoing embodiment, when each network device that has sent the second information sends the third information to the second network device, the second network device stops sending the clock-related information in the coverage area of the second network device in the RNA, thereby reducing overheads.

With reference to the second aspect, in some implementations of the second aspect, the second network device determines whether to send the clock-related information in the coverage area of the second network device in the RNA based on the third information further includes: when M is less than N, the second network device sends the clock-related information in the coverage area of the second network device in the RNA.

According to the foregoing embodiment, when the at least one network device that has sent the second information does not send the third information to the second network device, the second network device continues to send the clock-related information in the coverage area of the second network device in the RNA, thereby ensuring continuity of a clock-related service of a terminal device in an RNA whose coverage area includes the coverage area of the second network device.

According to a third aspect, a communication apparatus is provided, including a processing circuit (which may also be referred to as a processor) and an input/output interface (which may also be referred to as an interface circuit). The input/output interface is configured to input and/or output a signal, and the processing circuit is configured to perform the method in the first aspect or any possible method in the first aspect, or the processing circuit is configured to perform the method in the second aspect or any possible method in the second aspect.

With reference to the third aspect, in some implementations of the third aspect, the processor is configured to communicate with another apparatus by using an interface circuit, and perform the method in the first aspect or any possible method in the first aspect, or perform the method in the second aspect or any possible method in the second aspect. There is one or more processors.

According to a fourth aspect, a communication apparatus is provided. The communication apparatus may include a device, a module, or the like configured to perform functions of the communication apparatus.

With reference to the fourth aspect, in some implementations of the fourth aspect, the communication apparatus may include a module or unit that is configured to perform the method/operation/step/action described in the first aspect or any possible implementation of the first aspect in a one-to-one correspondence, where the module or unit may be a hardware circuit, may be software, or may be implemented by a combination of the hardware circuit and software.

With reference to the fourth aspect, in some implementations of the fourth aspect, the communication apparatus may include modules or units that are configured to perform the method/operation/step/action described in the second aspect or any possible implementation of the second aspect in a one-to-one correspondence. The modules or units may be hardware circuits, software, or a combination of hardware circuits and software.

According to a fifth aspect, a computer-readable storage medium is provided. The computer-readable storage medium stores a computer program or instructions. When the computer program or the instructions are run on a computer, the method according to any one of the first aspect or the possible implementations of the first aspect is performed, or the method according to any one of the second aspect or the possible implementations of the second aspect is performed.

According to a sixth aspect, a computer program product is provided, including a computer program or instructions. When the computer program or the instructions are run on a computer, the method according to any one of the first aspect or the possible implementations of the first aspect is performed, or the method according to any one of the second aspect or the possible implementations of the second aspect is performed.

According to a seventh aspect, a communication apparatus is provided, including a processor, configured to be connected to a memory, and configured to invoke a program stored in the memory, to perform any possible method in the first aspect, or to perform any possible method in the second aspect. The memory may be located inside the communication apparatus, or may be located outside the communication apparatus. The processor includes one or more processors.

In an implementation, the communication apparatus according to the second aspect, the third aspect, the fourth aspect, or the seventh aspect may be a chip or a chip system.

According to an eighth aspect, a chip apparatus is provided, including a processor, configured to invoke a computer program or a computer instruction in a memory, so that the processor performs any implementation of the first aspect, or so that the processor performs any implementation of the second aspect.

With reference to the eighth aspect, in some implementations of the eighth aspect, the processor is coupled to the memory by using an interface.

According to a ninth aspect, a communications system is provided, including a first network device and a second network device. The first network device is configured to perform any one of the first aspect or the possible implementations of the first aspect, and the second network device is configured to perform any one of the second aspect or the possible implementations of the second aspect.

For descriptions of beneficial effects of any one of the second aspect to the ninth aspect, refer to the descriptions of the beneficial effects of the first aspect.

### BRIEF DESCRIPTION OF DRAWINGS

FIG. 1 is a schematic diagram of a communications system to which an embodiment of this application is applicable;
FIG. 2 is a schematic diagram of another communications system to which an embodiment of this application is applicable;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a schematic flowchart of yet another communication method according to an embodiment of this application;
FIG. 7 is a schematic flowchart of still another communication method according to an embodiment of this application;
FIG. 8 is a schematic block diagram of a communication apparatus according to an embodiment of this application;
FIG. 9 is a schematic block diagram of another communication apparatus according to an embodiment of this application.

### DESCRIPTION OF EMBODIMENTS

The technical solutions in this application are described below with reference to the accompanying drawings.

This application presents aspects, embodiments, or features with reference to a system that may include a plurality of devices, components, modules, and the like. It should be appreciated and understood that each system may include other devices, components, modules, and the like, and/or may not include all devices, components, modules, and the like discussed with reference to the accompanying drawings. In addition, combinations of these solutions may also be used.

The term "and/or" in this specification describes only an association relationship between associated objects, and indicates that three relationships may exist. For example, A and/or B may indicate the following three cases: only A exists, both A and B exist, and only B exists. In addition, the character "/" in this specification generally indicates an "or" relationship between associated objects.

In addition, in the embodiments of this application, the terms such as "example" or "for example" are used to indicate an example, an illustration, or a description. An embodiment or design described as "an example" in this application should not be explained as being more preferred or having more advantages than another embodiment or design. To the contrary, the use of the word "example" is intended to present the concept in a concrete manner.

The service scenario described in the embodiments of this application is intended to describe the technical solutions in the embodiments of this application more clearly, and does not constitute a limitation on the technical solutions provided in the embodiments of this application. A person of ordinary skill in the art may know that, with the emergence of new service scenarios, the technical solutions provided in the embodiments of this application are also applicable to similar technical problems.

The use of terms such as "in one embodiment" or "in some embodiments" as described in this specification means that one or more embodiments of this application include specific features, structures, or characteristics described in connection with these embodiments. Therefore, the phrases "in one embodiment," "in some embodiments," "in other embodiments," "in additional embodiments," and the like, which appear at different places in this specification, do not necessarily refer to the same embodiment, but instead mean "one or more but not all embodiments," unless otherwise specifically emphasized. The terms "include," "comprise," "have," and their variants all mean "include but not limited to," unless otherwise specifically emphasized.

The technical solutions of the embodiments of this application may be applied to various communication systems, including but not limited to: the global system for mobile communications (global system for mobile communications, GSM), the enhanced data rate for GSM evolution (enhanced data rate for gsm evolution, EDGE) system, the wideband code division multiple access (wideband code division multiple access, WCDMA) system, the code division multiple access 2000 (code division multiple access, CDMA2000) system, the time division-synchronous code division multiple access (time division-synchronization code division multiple access, TD-SCDMA) system, the long term evolution (long term evolution, LTE) system, the LTE frequency division duplex (frequency division duplex, FDD) system, the LTE time division duplex (time division duplex, TDD) system, the worldwide interoperability for microwave access (worldwide interoperability for microwave access, WiMAX) communication system, the 5G mobile communication system or new radio (new radio, NR) system, the narrowband internet of things (narrow band internet of things, NB-IoT) system, the enhanced machine-type communication (enhanced machine-type communication, eMTC) system, the enhanced mobile broadband (enhanced mobile broadband, eMBB) system, the ultra-reliable low latency communication (ultra reliable low latency communications, URLLC) system, the satellite communication system, the LTE-machine-to-machine (LTE-machine-to-machine, LTE-M) system, and future 6^{th} generation (6^{th} generation, 6G) mobile communication systems, and the like.

It should be noted that, in this embodiment of this application, the term "communication" may also be described as "data transmission", "signal transmission", "information transmission", "transmission", or the like. In this embodiment of this application, the transmission may include sending or receiving. For example, the transmission may be uplink transmission, for example, the terminal device may send a signal to the network device. Alternatively, the transmission may be downlink transmission, for example, the network device may send a signal to the terminal device.

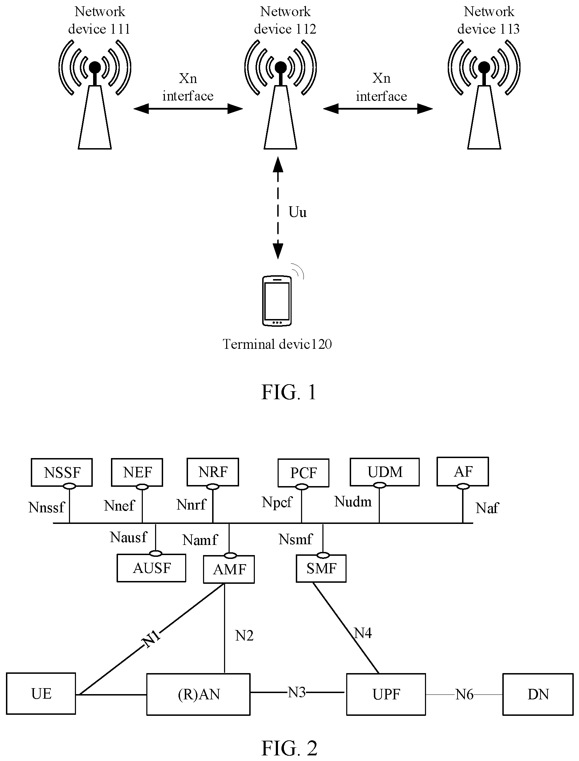

FIG. 1 is a schematic diagram of a communications system applicable to an embodiment of this application. As shown in FIG. 1, the communications system may include a plurality of communications devices, and the plurality of communications devices may perform wireless communication by using an air interface resource. For example, the communications device may include the network device 111, the network device 112, the network device 113, and the terminal device 120.

The network device 111, the network device 112, and the network device 113 may communicate with each other by using an Xn interface.

The network device 111, the network device 112, and the network device 113 may communicate with the terminal device 120. The network device 112 may be a base station that enables the terminal device 120 to access a radio access network (radio access network, RAN). Sometimes, the base station may also be referred to as an access network device or an access network node. It may be understood that, in systems using different radio access technologies, names of devices having a base station function may be different. For ease of description, apparatuses that provide a wireless communication access function for terminal devices are collectively referred to as a base station in the embodiments of this application. In the embodiments of this application, the network device includes but is not limited to a macro base station, a micro base station (also referred to as a small cell), a relay station, an access point, and the like in various forms. The network device includes an evolved node B (evolved node B, eNB or eNodeB), a radio network controller (radio network controller, RNC), a node B (node B, NB), and a base station controller (base station controller) in LTE. BSC), a base transceiver station (BTS), a home base station (home evolved nodeB, or home nodeB, HNB) a base band unit (base band unit, BBU), an access point, a wireless relay node, a wireless backhaul node, a transmission point (transmission point, TP), or a transmission and reception point (transmission and reception point) in a wireless fidelity (wireless fidelity, WIFI) system, a TRP) or the like may be a next generation base station node (next generation node basestation, gNB) or a transmission point (TRP or TP) in a 5G system, or one or one group (including a plurality of antenna panels) of a base station in the 5G system. A network node that forms a gNB or a transmission point, for example, a baseband unit (BBU) or a distributed unit (distributed unit, DU), and a network device in a future 6G network.

In some deployments, the network device may include a centralized unit (centralized unit, CU) and a DU. The CU implements some functions of the network device, and the DU implements some functions of the network device. For example, the CU is responsible for processing non-real-time protocols and services, and implements functions of a radio resource control (radio resource control, RRC) layer and a packet data convergence protocol (packet data convergence protocol, PDCP) layer. The DU is responsible for processing physical layer protocols and real-time services, and implements functions of a radio link control (radio link control, RLC) layer, a media access control (media access control, MAC) layer, and a physical (physical, PHY) layer. The network device may further include an active antenna unit (active antenna unit, AAU for short). The AAU implements some physical layer processing functions, radio frequency processing, and functions related to an active antenna. Because information at the RRC layer eventually becomes information at the PHY layer, or is converted from information at the PHY layer, in this architecture, higher layer signaling, such as RRC layer signaling, may also be considered as being sent by the DU, or being sent by the DU and the AAU. It may be understood that the network device may be a device that includes one or more of a CU node, a DU node, and an AAU node. In addition, the CU may be divided into a network device in a radio access network (RAN), or the CU may be divided into a network device in a core network (core network, CN). This is not limited in this application. The network device may use a CU-DU separation architecture, or may not use a CU-DU separation architecture. This is not limited in this application.

In this embodiment of this application, the apparatus used to implement a function of the network device may be a network device, or may be an apparatus that can support the network device in implementing the function, for example, a chip system. The apparatus may be installed in the network device. In the technical solutions in the embodiments of this application, an example in which an apparatus used to implement a function of the network device is a network device, and a network device is a base station is used to describe the technical solutions provided in the embodiments of this application.

The terminal device 120 may be any device with a wireless transceiver function, or the terminal device 120 may be a device that provides voice and/or data connectivity for a user. The terminal device 120 may be deployed on land, including indoors or outdoors, handheld, or vehicle-mounted. It can also be deployed on the water surface (such as a ship). It can also be deployed in the air (e.g., on aircraft, balloons, satellites, etc.). The terminal device 120 may also be referred to as user equipment (user equipment, UE), an access terminal, a terminal, a subscriber unit (subscriber unit), a subscriber station, a mobile station, a mobile station (mobile station, MS), a remote station, a remote terminal, a mobile device, a mobile terminal (mobile terminal, MT), a user terminal, a wireless network device, a user agent, or a user apparatus. In this embodiment of this application, the terminal device 120 includes but is not limited to: a cellular phone (cellular phone), a mobile phone (mobile phone), a wireless data card, a wireless modem (modem), a tablet computer, a laptop computer (laptop computer), a cordless phone, and a session initiation protocol (session initiation protocol, SIP) phone, smart phone, wireless local loop (wireless local loop, WLL) station, personal digital assistant (personal digital assistant, PDA), a handheld device (handset) having a wireless communication function, a computing device or another device connected to a wireless modem, an in-vehicle device, a wearable device, an unmanned aerial vehicle device, an internet of things, or a terminal device in the internet of vehicles, a terminal in any form in a future network, relay user equipment, a terminal in a future evolved public land mobile network (public land mobile network, PLMN), or the like. The terminal device 120 may also be a virtual reality (virtual reality, VR) terminal device, an augmented reality (augmented reality, AR) terminal device, a machine type communication (machine type communication, MTC) terminal, a terminal device in industrial control (industrial control), a terminal device in self driving (self driving), a terminal device in remote medical (remote medical), a terminal device in smart grid (smart grid), a terminal device in smart city (smart city), a terminal device in a smart home (smart home), or the like. This is not limited in this embodiment of this application.

In the embodiments of this application, an apparatus configured to implement a function of the terminal device may be the terminal device, or may be an apparatus that can support the terminal device in implementing the function, for example, a chip system. The apparatus may be installed in the terminal. The chip system may include a chip, or may include a chip and another discrete component. In the technical solutions in the embodiments of this application, an apparatus configured to implement a function of the terminal device may be the terminal device, which may also be referred to as a terminal (terminal). The following may use an example in which the terminal device is UE to describe the technical solutions provided in the embodiments of this application.

It should be understood that FIG. 1 is merely a simplified schematic diagram of an example for ease of understanding, and the communications system 100 may further include another network device or another terminal device, which are not shown in FIG. 1.

The network device may communicate with the terminal device 120 by using a radio link. A transmission link from the network device to the terminal device 120 may be referred to as a downlink (downlink, DL) or a downlink channel, and is used to transmit a downlink signal. A transmission link from the terminal device 120 to the network device may be referred to as an uplink (uplink, UL) or an uplink channel, and is used to transmit an uplink signal. The network device and the terminal device 120 may further perform downlink data transmission through a downlink channel and perform uplink data transmission through an uplink channel. The terminal device 120 may perform wireless communication with another terminal device. A transmission link from the terminal device 120 to another terminal device may be referred to as a sidelink (sidelink, SL) or a sidelink channel, and is used to transmit a sidelink signal. The terminal device 120 may further perform sidelink data transmission with another terminal device through a sidelink channel.

FIG. 2 is a schematic diagram of another communication system to which an embodiment of this application is applicable. For example, the UE in FIG. 2 may be the terminal device 120 mentioned above, and the RAN in FIG. 2 may be any one of the network device 111 to the network device 113 mentioned above. The following describes some core network elements that may be involved with reference to FIG. 2.

The access and mobility management network element is mainly used for the attachment of terminals and the tracking area update procedure in a mobile network. The access and mobility management network element can provide non-access stratum (non access stratum, NAS) messages, perform registration management, connection management, reachability management, allocate a tracking area list (tracking area list, TA list), implement lawful interception, provide access authorization, perform authentication, manage mobility, and transparently route session management (session management, SM) messages to the session management network element. In the 5th generation (5th generation, 5G) communication system, the access and mobility management network element may be an access and mobility management function (access and mobility management function, AMF). In future communication systems (e.g., 6G communication systems), the mobility management network element may still be an AMF network element, or it may have another name, which is not limited in this application.

The session management network element is primarily used for session and bearer management in mobile networks, such as session establishment, modification, and release. Specific functions include assigning internet protocol (internet protocol, IP) addresses to terminals and selecting user plane function network elements that provide packet forwarding capabilities. The session management network element can deliver data packet forwarding policies, QoS policies, and the like to the user plane function network element based on the NG4 interface. In a 5G communication system, the session management network element may be a session management function (session management function, SMF). In future communication systems (e.g., 6G communication systems), the session management network element may still be an SMF network element or it may have another name, which is not limited in this application.

The user plane function network element is mainly used to process user packets, such as forwarding, charging, lawful interception, and the like. Moreover, the user plane function network element can be used for functions such as routing and forwarding of user plane data, threshold control, traffic monitoring, and verification. The user plane function network element can also be used for managing the UE IP address, managing core network (core network, CN) tunnel information, and the like. The user plane function network element may also be referred to as a PDU session anchor (PDU session anchor, PSA). In a 5G communication system, the user plane function network element may be a UPF. In future communication systems (e.g., 6G communication systems), the user plane function network element may still be a UPF network element or it may have another name, which is not limited in this application.

The control plane function network element corresponding to the user plane function network element may be a control plane function network element (control plane function, CP), and the control plane function network element may include the access and mobility management network element and the session management network element mentioned above.

The policy control network element includes functions such as user subscription data management, policy control, charging policy control, and QoS control. In a 5G communication system, the policy control network element may be a policy control function (policy control function, PCF). In future communication systems (e.g., 6G communication systems), the policy control network element may still be a PCF network element, or it may have another name, which is not limited in this application.

The network slice selection function network element is mainly used to select an appropriate network slice for a service of a terminal device. In a 5G communication system, the network slice selection function network element may be a network slice selection function (network slice selection function, NSSF) network element. In future communication systems (e.g., 6G communication systems), the network slice selection function network element may still be an NSSF network element, or it may have another name, which is not limited in this application.

The network repository function network element is primarily used to provide registration and discovery functions for network elements or services provided by the network elements. In a 5G communication system, the network repository function network element may be a network repository function (network repository function, NRF). In future communication systems (e.g., 6G communication systems), the network repository function network element may still be an NRF network element, or it may have another name, which is not limited in this application.

The network data analytics network element can collect data from various network functions (network function, NF), such as policy control network elements, session management network elements, user plane function network elements, access and mobility management network elements, and application function network elements (via a network exposure function network element), and then perform analysis and prediction on the collected data. In a 5G communication system, the network data analytics network element may be a network data analytics function (network data analytics function, NWDAF). In future communication systems (e.g., 6G communication systems), the network data analytics network element may still be an NWDAF network element, or it may have another name, which is not limited in this application.

The unified data management network element is mainly used to manage subscription information of terminal devices. In a 5G communication system, the unified data management network element may be a unified data management (unified data management, UDM). In future communication systems (e.g., 6G communication systems), the unified data management network element may still be a UDM network element, or it may have another name, which is not limited in this application.

The unified data repository network element is mainly used to store structured data information, which includes subscription information, policy information, and network data or service data defined by a standard format. In a 5G communication system, the unified data repository network element may be a unified data repository (unified data repository, UDR). In future communication systems (e.g., 6G communication systems), the unified data repository network element may still be a UDR network element, or it may have another name, which is not limited in this application.

The authentication service function network element is primarily used for performing security authentication on terminal devices. In a 5G communication system, the authentication service function network element may be an authentication server function (authentication server function, AUSF). In future communication systems (e.g., 6G communication systems), the authentication service function network element may still be an AUSF network element, or it may have another name, which is not limited in this application.

The network exposure function network element can control the exposure of certain network functions to applications. In a 5G communication system, the network exposure function network element may be a network exposure function (network exposure function, NEF). In future communication systems (e.g., 6G communication systems), the network exposure function network element may still be an NEF network element, or it may have another name, which is not limited in this application.

The application function network element may provide service data of various applications to the control plane network element of an operator's communication network, or obtain network data information and control information from the control plane network element of the communication network. In a 5G communication system, the application function network element may be an application function (application function, AF). In future communication systems (e.g., 6G communication systems), the application function network element may still be an AF network element, or it may have another name, which is not limited in this application. For example, the application function network element may also be referred to as an application server or a service server. In addition, the application function network element may be deployed by an operator network or may be deployed by a third party.

A data network is primarily used to provide data transmission services for terminal devices. The data network can be a private network, such as a local area network, or a public data network (public data network, PDN), such as the Internet (Internet). It can also be a dedicated network jointly deployed by operators, such as a configured IP multimedia core network subsystem (IP multimedia core network subsystem, IMS) service. Additionally, the data network may be sourced from a third party.

In the architecture shown in Figure 1, the interface names and functions between the various network elements are as follows:
1. N1: The interface between the AMF and the UE, which can be used to transmit QoS control rules to the UE, etc.
2. N2: The interface between the AMF and the (R)AN, which can be used to transfer radio bearer control information from the core network to the RAN, etc.
3. N3: The interface between the RAN and the UPF, used to transmit uplink or downlink user plane data between the RAN and the UPF.
4. N4: The interface between the SMF and UPF, which can be used to transmit information between the control plane and the user plane, including the delivery of forwarding rules, QoS control rules, traffic statistics rules from the control plane to the user plane, and the reporting of user plane information.
5. N6: The interface between the UPF and the DN, used to transmit uplink or downlink user data streams between the UPF and the DN.
6. The service-based interfaces Nnssf, Nnef, Nausf, Nnrf, Namf, Npcf, Nsmf, and Nudm are the service-based interfaces provided for the aforementioned NSSF network element, NEF network element, AUSF network element, NRF network element, AMF network element, PCF network element, SMF network element, and UDM network element, respectively, and are used to invoke the corresponding service-based operations.

It should be understood that the network element or function mentioned above may be a network element in a hardware device, a software function running on dedicated hardware, or a virtualized function instantiated on a platform (e.g., a cloud platform). Optionally, the network element or function may be implemented by one device, or by a plurality of devices working together, or may be a functional module within one device. This is not specifically limited in the embodiments of this application.

It should be noted that the network device may also exchange information with the SMF.

The 5G system defined by the 3GPP standardization organization supports an air interface high-precision timing service, where the network device may provide a 5G high-precision time to the terminal device through an air interface message, thereby achieving high-precision time synchronization between the terminal device and the network device. For example, 5G air interface time synchronization may be achieved by indicating a 5G time at a reference point to the UE by the gNB. The gNB may perform 5G timing for the UE in a broadcast manner (for example, by broadcasting system information) or in a unicast manner (for example, by sending RRC signaling).

The network device may broadcast a system information block (system information block, SIB) 9 to achieve time synchronization between the network device and the terminal device. For example, the SIB 9 broadcast by the network device may include a specific time T, where the protocol defines a reference point of the time T as the ending boundary of the radio frame (frame) in which the ending boundary of the system information (system information, SI) window (window) containing the SIB 9 is located, or the ending boundary of the radio frame immediately after the ending boundary. For example, if the ending boundary of the SI window in which the SIB 9 is located is exactly the ending boundary of the radio frame whose system frame number (system frame number, SFN) is x, then the time T indicated in the SIB 9 is the 5G time at the ending boundary of the radio frame corresponding to the SFN x. For another example, if the ending boundary of the SI window in which the SIB 9 is located is in the middle of the radio frame whose SFN is x, then the time T indicated in the SIB 9 is the 5G time at the ending boundary of the radio frame corresponding to the SFN x.

The network device may send an RRC unicast message to the terminal device within a slot (slot) of the SFN x-3. For example, the RRC unicast message may be a downlink information transfer (DLInformationTransfer) message. The RRC unicast message includes the 5G time T and the time reference point SFN x. After receiving the RRC unicast message, the terminal device may determine that the 5G time corresponding to the end position of the radio frame of SFN x is time T, where the aforementioned SNF x is the SNF x within the SFN period closest to the moment when the RRC unicast message is received.

Building on the foundation of base stations providing 5G clock signals to UEs, 3GPP release (release, R) 18 further defines the characteristics of a timing resilience system (timing resilience system, TRS). When a UE accesses a 5G system (5G system, 5GS), the 5G core network can indicate to the base station which 5G clock synchronization states the UE is interested in, and the base station can provide 5G clock synchronization state information (or referred to as clock quality information) to the interested UEs. The 5G clock synchronization state information includes at least one of the following.
(1) Synchronization state. The synchronization state may include locked (locked), holdover (holdover), or free run (free run), where locked indicates that the 5G clock is in a locked state with the clock source; holdover indicates that the 5G clock is not locked to the clock source but is in a state of maintaining a certain level of clock accuracy; and free run indicates that the 5G clock is neither locked to the clock source nor in a state of maintaining clock accuracy.
(2) Whether the time can be traced back to the universal time coordinated (universal time coordinated, UTC).
(3) Whether the time can be traced back to the global navigation satellite system (global navigation satellite system, GNSS).
(4) Clock frequency stability.
(5) Clock accuracy.
(6) Clock source.

For a connected (connected) UE, the base station can directly provide the UE with the aforementioned clock synchronization status information through an RRC unicast message. However, for an inactive (Inactive) UE or an idle (idle) UE, the base station first needs to notify the UE of a change in the 5G clock synchronization status, and then, after the UE transitions to the connected state, the base station provides the 5G clock synchronization status information to the UE through an RRC unicast message. Specifically, when the base station detects a change in the clock synchronization status, it includes a new event identifier (event ID) in the broadcast SIB9 message. After an inactive or idle UE reads the event identifier contained in SIB9 and detects a change in the event identifier, or when the UE detects a change in the base station serving the UE, the UE may initiate an RRC connection establishment procedure or an RRC connection resume procedure. Once the base station detects that the UE has transitioned to the connected state and the UE is interested in the clock synchronization status information, the base station sends the 5G clock synchronization status information to the UE.

The base station transitions the UE from the connected state to the inactive state by sending an RRC release (release) message to the UE. The RRC release message may include a suspend config (suspendConfig) information element, in which the base station configures the following information.
(1) RNA information, may include one or more cell identifiers under one or more base stations, or one or more RAN area identifiers.
(2) Inactive radio network temporary identifier (I-RNTI), may be an identifier allocated by a base station for an inactive state user.
(3) Periodic RNA update timer value (PeriodicRNA update-TimerValue) may be used to control the duration of the timer t380 that initiates the periodic RNA update (RNA update, RNA-U) process. The timer t380 is started when the UE enters the Inactive state.

When an inactive UE is moving, the RNA-U procedure will be initiated under the following conditions.
(1) When the timer T380 expires, the UE initiates the periodic RNA-U procedure.
(2) The UE reselects to a cell that does not belong to the configured RNA.

In other words, when an inactive UE moves within an RNA, it may not need to notify the base stations within the RNA. For example, if the RNA includes base station 1 and base station 2, when an inactive UE moves from the coverage area of base station 1 to the coverage area of base station 2, the UE may not need to inform either base station 1 or base station 2 of the change in the UE's location.

When an inactive UE initiates the RNA-U procedure, it needs to perform the RRC connection resume procedure. Specifically, the UE can send an RRC Resume Request message to the currently camped base station (or referred to as the new serving gNB (new serving gNB)), where the RRC Resume Request message carries the UE's I-RNTI. The currently camped base station identifies the last serving gNB (last serving gNB) (or anchor base station, which is the base station from which the UE was released into the inactive state) on which the UE previously accessed based on the UE's I-RNTI. If the currently camped base station is not the same as the last serving gNB, the currently camped base station may initiate a retrieve UE context (RETRIEVE UE CONTEXT) procedure to the last serving gNB on which the UE previously accessed in order to request the UE context. The last serving gNB on which the UE previously accessed may decide whether to perform anchor relocation (anchor relocation), that is, whether to transfer the UE's context to the new serving gNB. If the last serving gNB on which the UE previously accessed does not transfer the UE context, it may send an RRCRelease message to the UE via the new serving gNB to transition the UE to the inactive or idle state. If the last serving gNB on which the UE previously accessed transfers the UE context to the new serving gNB, the new serving gNB, after obtaining the UE context, may decide to transition the UE to the connected state, or to remain in the inactive state, or to transition to the idle state.

If the RNA area configured for an Inactive UE includes cells served by multiple base stations, only the anchor base station of the UE can detect whether the UE is interested in 5G clock information and/or 5G clock status information, while other base stations within the RNA are not aware of this information. For example, when gNB1 transfers the UE to the inactive state, if the UE is interested in 5G clock information and/or 5G clock status information, gNB1 may broadcast SIB9 to provide the UE with 5G clock information or indicate whether there has been a change in 5G timing quality. However, when an Inactive UE moves out of the coverage area of gNB1 and enters the coverage area of another base station within the RNA, such as gNB2, while the UE is no longer within the coverage of gNB1, gNB2 will not be aware of the presence of an Inactive UE interested in clock information and/or clock status information within its coverage area and may not broadcast SIB9. In this case, the UE may not receive the 5G clock information or be able to detect whether there has been a change in 5G clock quality, which may result in applications that require clock-related information being unable to function properly due to the inability to obtain the clock-related information in a timely manner.

Therefore, how to ensure the continuity of clock-related services is an urgent issue that needs to be addressed.

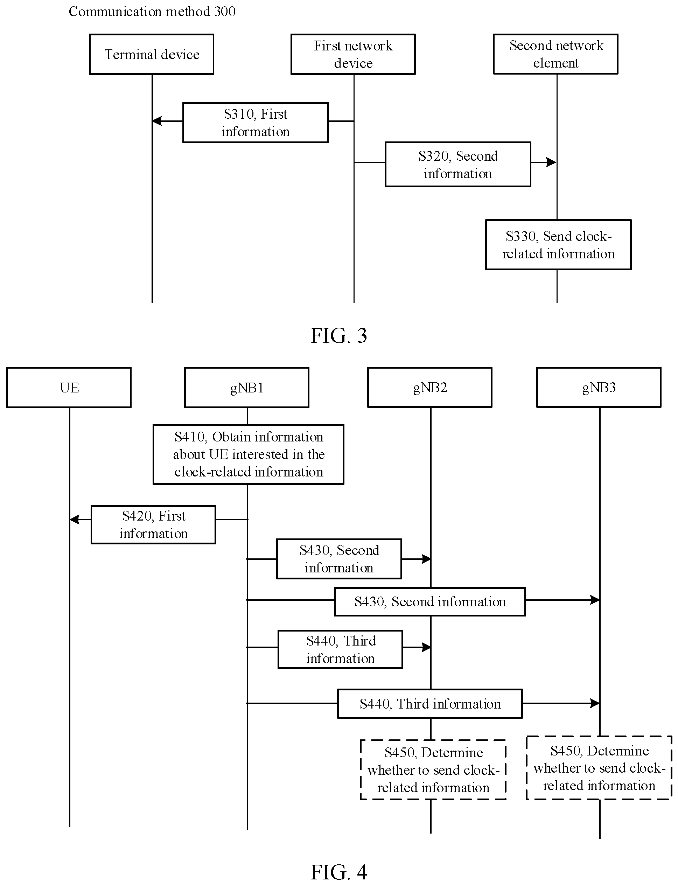

FIG. 3 is a schematic flowchart of a communication method 300 according to an embodiment of this application. The method 300 can ensure the continuity of clock-related services. The following describes the method 300 with reference to FIG. 3.

S310: The first network device sends first information to a terminal device interested in the clock-related information.

The first information may indicate an RNA, and the RNA may include a coverage area of the first network device and a coverage area of the second network device.

The first network device may also be referred to as an anchor network device, a last serving base station, or another name. A person skilled in the art may understand that the first network device begins to function as an anchor base station for the terminal device that is interested in the clock-related information. In some optional embodiments, before S310, the method 300 further includes: the first network device receiving the context of the terminal device from a third network device. It can be understood that the third network device is an anchor base station for the terminal device (i.e., the previous or prior one), and the first network device is a new anchor base station for the terminal device.

The clock-related information may include clock information and/or clock status information. The clock information may be 5G clock information or may be 6G clock information, which is not limited in this application. The clock status information may be 5G clock status information or may be 6G clock status information, which is not limited in this application. For example, the clock information may be the time T in the SIB9 message, which is used for clock synchronization between the terminal device and the second network device. For another example, the clock status information may be an event identifier in the SIB9 message, which is used to indicate that a clock synchronization status changes, thereby triggering an RRC connection establishment process or an RRC connection resume process of the terminal device, so that the terminal device can obtain new clock synchronization status information. Sending the clock-related information may be understood as broadcasting the clock-related information.

The terminal device in S310 is a terminal device interested in the clock-related information. In some optional embodiments, the method 300 further includes: obtaining, by the first network device, a terminal device interested in the clock-related information. There may be one or more of the terminal devices.

As an example, the first network device may receive indication information from a core network element (e.g., SMF), where the indication information may indicate that the terminal device is interested in the clock information and/or the clock status information. For instance, when a UE in an idle state accesses the first network device to enter a connected state, the core network element may send the aforementioned indication information to the first network device.

As another example, a neighboring network device of the first network device may send indication information to the first network device, where the indication information may indicate that the terminal device is interested in the clock information and/or the clock status information. For instance, during a base station handover process, the source (source) base station may send the aforementioned indication information to the target (target) base station.

As yet another example, the terminal device may send indication information to the first network device, where the indication information may indicate that the terminal device is interested in the timing information and/or the timing status information. For instance, when the terminal device accesses the first network device, it may send the aforementioned indication information to the first network device through an RRC message.

The terminal device being interested in the clock-related information may include that the terminal device needs to obtain or receive the clock-related information.

The first information may be carried in an RRCRelease message, but the message in which the first information is carried is not limited in this application. The first information may also be carried in another message.

The first information may indicate an RNA. For example, the first information may include one or more cell identifiers under one or more base stations, or one or more RAN area identifiers. Alternatively, the first information may carry or include an identifier of the RNA. The name of the first information is not limited in this application. For example, the first information may be referred to as RNA information, an RRCRelease message, or have another name.

The name of the RNA is not limited in this application; for example, the RNA may be referred to as a radio access network notification area or may have other names. If a terminal device configured with an RNA moves outside the RNA, the terminal device needs to initiate an RNA-U procedure. In other words, a terminal device configured with an RNA may move within the RNA without notifying network devices in the RNA. If the terminal device configured with an RNA remains within the RNA for a preset duration (e.g., the duration of a timer t380) without moving out, the terminal device may not notify the network devices in the RNA. In other words, the terminal device configured with an RNA may not notify the network devices in the RNA for the preset duration.

The RNA may include the coverage area of the first network device and the coverage area of the second network device. It should be noted that the coverage area of the first network device may be an entire coverage area of the first network device, or a part of the entire coverage area of the first network device. For example, the first network device may cover three cells, and the coverage area of the first network device may be one cell, two cells, or three cells among the three cells. Similarly, the coverage area of the second network device may be an entire coverage area of the second network device, or a part of the entire coverage area of the first network device. For example, the second network device may cover four RAN areas, and the coverage area of the second network device may be one RAN area, two RAN areas, three RAN areas, or four RAN areas among the four RAN areas. For ease of description, unless otherwise specified, the coverage area of the first network device mentioned below refers to an area covered by the first network device in the RNA, and the coverage area of the second network device refers to an area covered by the second network device in the RNA.

The coverage area of the first network device in the RNA may be different from the coverage area of the second network device. The coverage area of the second network device may not be within the coverage area of the first network device, or the coverage area of the second network device is not within an area maintained by the first network device. For example, the RNA includes a cell 1 and a cell 2, the first network device can cover the cell 1 but cannot cover the cell 2, and the second network device can cover the cell 2. Alternatively, the coverage area of the first network device includes the cell 1, the coverage area of the first network device does not include the cell 2, and the coverage area of the second network device includes the cell 2.

It should be noted that the number of second network devices may be one or more.

Optionally, in another implementation scenario of the foregoing embodiment, the first information is further used to release the terminal device, so that the terminal device enters the inactive state.

The first information may be referred to as an RRCRelease message or another name. It may be understood that, before the first information releases the terminal device, the terminal device may be in a connected state; and after the first information releases the terminal device, the terminal device may be in an inactive state.

S320: The first network device sends second information to the second network device. Correspondingly, the second network device receives the second information from the first network device.

The second information may indicate the second network device to send the clock-related information within a coverage area of the second network device.

The second information may be sent to the second network device through an Xn interface. A message carried in the second information is not limited in this application. The second information may alternatively be carried in any message. A name of the second information is not limited in this application. For example, the second information may be referred to as indication information, a message 1, new information, synchronization start information, or have another name.

It may be understood that the second information may indicate that there may be a terminal device interested in the clock-related information in the coverage area of the second network device. The second network device may learn, based on the second information, that there is a terminal device interested in the clock-related information and maintained by the first network device in the coverage area of the second network device in the RNA.

It should be noted that the fact that the second information indicates the second network device to send the clock-related information within the coverage area of the second network device does not necessarily mean that the second network device will definitely send the clock-related information within the coverage area of the second network device according to the indication of the second information. On one hand, the second network device may not have received the second information; on the other hand, even if the second network device receives the second information, it may not necessarily send the clock-related information within the coverage area of the second network device. In other words, the second network device may determine, based on its own implementation, whether the clock-related information needs to be sent within the coverage area of the second network device.

In some optional embodiments, before S320, the method 300 includes: the first network device determines that the RNA includes the coverage area of the second network device. In other words, the first network device determines that the RNA configured for the terminal device includes the coverage area of another network device (or a network device other than the first network device).

Furthermore, the method 300 may include the following: The first network device determines that the coverage area of the second network device does not fall within the RNA of other existing inactive terminal devices (i.e., inactive terminal devices interested in clock-related information other than the terminal device in S310) that the first network device maintains and that are also interested in clock-related information. The inactive terminal devices interested in clock-related information that the first network device maintains may be understood as the inactive terminal devices interested in clock-related information that the first network device serves, or, in other words, the inactive terminal devices interested in clock-related information under the first network device. In other words, the anchor base stations of these inactive terminal devices interested in clock-related information are the first network device.

A person skilled in the art may understand that the method 300 may be performed multiple times. For other existing inactive terminal devices that the first network device maintains and that are interested in clock-related information, if the method 300 has been performed for these terminal devices, the network devices other than the first network device included in the RAN configured for these terminal devices may have already received the second information. Therefore, the first network device determines that the coverage area of the newly emerged second network device does not fall within the RAN of the other existing inactive terminal devices that the first network device maintains and that are interested in clock-related information, thereby avoiding the first network device from repeatedly sending the second information to the network devices that have already received the second information.

In some optional embodiments, the method 300 includes: The first network device determines whether the RNA includes a coverage area of the second network device, and whether the coverage area of the second network device is not within an RNA of another terminal device (or a non-activated terminal device other than the terminal device in S310, which is interested in the clock-related information) for which the first network device maintains an existing interest in the clock-related information. If yes, S320 may be performed. If no, S320 may not be performed.

Optionally, in another implementation scenario of the foregoing embodiment, the second information includes an identifier of the first network device and/or an identifier of the coverage area of the second network device, where the identifier of the first network device is used to indicate that the coverage area of the second network device corresponds to the first network device. That is, the RNA range configured for the non-activated terminal device for which the first network device maintains an interest in the clock-related information includes the coverage area of the second network device.

For example, the identifier of the coverage area of the second network device may include the identity (cell identity) of at least one cell and/or the identity (RAN area ID) of at least one RAN area. The coverage area of the second network device may also be referred to as the affected area of the second network device, the affected RNA range, or have other names. "Affected" means that the second network device's range falls within the RNA of another first network device that functions as an anchor base station and maintains an interest in clock-related information for an inactive terminal device.

Through the foregoing embodiment, the second network device may determine the source of the second information based on the second information. Alternatively, the second network device may determine, based on the second information, to send clock-related information within the coverage area of the second network device, thereby ensuring the continuity of clock-related services for terminal devices within the coverage area of the second network device.

In some optional embodiments, the second information further includes a first flag (flag), where the first flag indicates that the coverage area of the second network device is an added new area, that is, the coverage area of the second network device is an RNA of an inactive terminal device that is interested in clock-related information and is configured under the first network device.

S330: The second network device sends the clock-related information based on the second information.

The second network device may send the clock-related information by broadcasting a SIB9 message.

Optionally, in another implementation scenario of the foregoing embodiment, S330 includes: the second network device sends the clock-related information within the coverage area of the second network device in the notification area.

In another optional embodiment, S330 includes: the second network device does not send the clock-related information within the coverage area of the second network device in the notification area. That is, even if the second network device receives the second information, it may choose not to send the clock-related information. For example, the second network device may not provide the clock-related information to inactive terminal devices within its coverage area based on some privacy policies configured by the operator or other factors.

According to the foregoing embodiment, in cases where the RNA maintained by the anchor base station for terminal devices interested in clock-related information includes the coverage areas of other neighboring base stations, the anchor base station may send second information to the neighboring base station. The neighboring base station may then send the clock-related information based on the second information, thereby enabling the terminal device to receive the clock-related information even within the coverage area of the neighboring base station. This prevents applications that require the clock-related information from being unable to function properly due to the inability to obtain the clock-related information in a timely manner, thereby ensuring the continuity of clock-related services.

Optionally, in another implementation scenario of the foregoing embodiment, the method 300 further includes: the first network device sends third information to the second network device, where the third information may be used to indicate that the second network device does not send the clock-related information within the coverage area of the second network device. Correspondingly, the second network device receives the third information from the first network device.

The third information may be sent to the second network device through an Xn interface. This application does not limit the message carried by the third information, and the third information may alternatively be carried in any message. The name of the third information is not limited in this application. For example, the third information may be referred to as indication information, message 2, reduction information, stop synchronization information, or another name.

It may be understood that, when the first network device no longer functions as an anchor base station for a terminal device interested in the clock-related information, the first network device may send third information to the second network device. The third information may indicate that there is no terminal device interested in the clock-related information and maintained by the first network device within the coverage area of the second network device. Based on the second information, the second network device may learn that there is no terminal device interested in the clock-related information and maintained by the first network device within the coverage area of the second network device in the RNA.

It should be noted that the fact that the third information indicates that the second network device does not send the clock-related information within the coverage area of the second network device does not necessarily mean that the second network device definitely does not send the clock-related information within the coverage area of the second network device according to the indication of the third information. On one hand, the second network device may not have received the third information; on the other hand, even if the second network device receives the third information from the first network device, the second network device may still continue to send the clock-related information within the coverage area of the second network device.

For example, in addition to the first network device sending second information to the second network device to indicate the second network device to send the clock-related information in the cell 1 covered by the second network device, another network device also sends second information to the second network device to indicate the second network device to send the clock-related information in the cell 1, and the second network device does not receive the third information from the another network device. In this case, there may be an inactive terminal device that is interested in the clock-related information and is maintained by the another network device within the cell 1, and the second network device may still send the clock-related information in the cell 1, so that the inactive terminal device that is interested in the clock-related information and is maintained by the another network device can achieve clock synchronization.

In some optional embodiments, before S320, the method 300 includes: the first network device determining that the RNA of the terminal device does not include the coverage area of the second network device.

For example, the first network device reconfigures the RNA, and the new RNA of the terminal device does not include the coverage area of the second network device.

For another example, the first network device determines that the terminal device enters a connected state or an idle state. It can be understood that if the terminal device enters the connected state or the idle state, the RNA configured for the terminal device will become invalid, which is equivalent to the effective RNA of the terminal device not including the coverage area of the second network device, or the first network device no longer serving as an anchor base station for the terminal device.

For another example, the first network device deletes the context of the terminal device or migrates the context of the terminal device to another network device. It can be understood that if the first network device does not have the context of the terminal device, the first network device no longer functions as an anchor base station for the terminal device, and thus the effective RNA of the terminal device does not include the coverage area of the second network device.

Further, the method 300 may include: The first network device determines that the coverage area of the second network device is not within the RNA maintained by the first network device for existing inactive terminal devices (i.e., inactive terminal devices other than the one in S310) that are interested in clock-related information.

A person skilled in the art may understand that if the coverage area of the second network device is within an RNA of another existing terminal device that is interested in the clock-related information and that is in an inactive state and that is maintained by the first network device, it may indicate that there is still another terminal device that is interested in the clock-related information and that is in an inactive state and that is maintained by the first network device in the coverage area of the second network device. For example, there are non-activated UEs 1 and 2 that are interested in the clock-related information under the first network device, an RNA 1 of the UE 1 includes cell 1, and an RNA 2 of the UE 2 includes cell 1. If the first network device reconfigures, for the UE 1, an RNA 1 that does not include cell 1, or if the UE 1 enters a connected state or an idle state, or if the first network device deletes or migrates the context of the UE 1, the first network device may not send the third message to the second network device. This is because the UE 2 may still be in the cell 1, and if the second network device stops sending the clock-related information in the cell 1 at this time, the UE 2 cannot achieve clock synchronization.

In some optional embodiments, the method 300 includes: the first network device determines whether an RNA does not include the coverage area of a second network device, and whether the coverage area of the second network device is not within the RNA of another terminal device (or a non-activated terminal device interested in clock-related information other than the terminal device in S310, i.e., non-activated terminal devices interested in clock-related information other than the terminal device in S310) that the first network device maintains and that is interested in clock-related information. If this is the case (i.e., the RNA does not include the coverage area of the second network device, and the coverage area of the second network device is not within the RNA of another non-activated terminal device interested in clock-related information that the first network device maintains), then third information may be sent to the second network device. If this is not the case, then the third information is not sent to the second network device.

According to the foregoing embodiment, in cases where the RNA maintained by the anchor base station for terminal devices interested in clock-related information does not include the coverage areas of other neighboring base stations, the anchor base station sends third information to the neighboring base stations. The third information may indicate that the second network device does not send the clock-related information within the coverage area of the second network device, thereby saving overhead.

Optionally, in another implementation scenario of the foregoing embodiment, the third information includes the identifier of the first network device and/or the identifier of the coverage area of the second network device.

For example, the identifier of the coverage area of the second network device may include the identifier of the at least one cell and/or the identifier of the at least one RAN area. The identifier of the coverage area of the second network device in the third information may be the same as the identifier of the coverage area of the second network device in the first information.

The identifier of the first network device may be associated with the identifier of the coverage area of the second network device, or in other words, the first network device may be associated with the coverage area of the second network device.

The second network device may receive the second information and the third information from multiple networks. The second network device may determine, based on whether network devices associated with the coverage area of the second network device all send the third information, whether to stop sending the clock-related information in the coverage area of the second network device. For example, if the second network device receives second information that includes the identifier of the first network device and the identifier of the cell 1, the second network device may send the clock-related information in the cell 1 based on the second information. Then, if the second network device receives another piece of second information that includes the identifier of the first network device and the identifier of the cell 1, the first network device has already sent the clock-related information in the cell 1, so that repeated processing is not required. Then, if the second network device receives third information that includes the identifier of the first network device and the identifier of the cell 1. Because the identifier associated with the cell 1 includes the identifier of the first network device and the identifier of the second network device, the second network device may not stop sending the clock-related information in the cell 1, or in other words, the second network device may continue to send the clock-related information in the cell 1. Then, if the second network device receives another piece of third information that includes the identifier of the second network device and the identifier of the cell 1. In this case, the second network device may stop sending the clock-related information in the cell 1.

According to the foregoing embodiment, the second network device may determine the source of the third information based on the third information, so as to determine whether to stop sending the clock-related information in the coverage area of the second network device. Alternatively, the second network device may determine, based on the third information, to stop sending the clock-related information in the coverage area of the second network device, thereby reducing overheads.

In some optional embodiments, the second information further includes a second flag, where the second flag indicates that the coverage area of the second network device is a reduced coverage area, that is, the coverage area of the second network device is an RNA of a terminal device that is not configured under the first network device.

Optionally, in another implementation scenario of the foregoing embodiment, the method 300 further includes: The second network device determines, based on the third information, whether to send the clock-related information in the coverage area of the second network device within the RNA.

For example, the second network device may determine, based on the third information, to continue sending the clock-related information in the coverage area of the second network device within the RNA, thereby ensuring continuity of a clock-related service of a terminal device whose RNA includes the coverage area of the second network device.

For another example, the second network device may determine, based on the third information, to stop sending the clock-related information within the coverage area of the second network device in the RNA, thereby reducing overheads.

According to the foregoing embodiment, the second network device may flexibly determine, based on the third information, whether to send the clock-related information within the coverage area of the second network device in the RNA, thereby ensuring continuity of a clock-related service of a terminal device in an RNA that includes the coverage area of the second network device, or reducing overheads.

Optionally, in another implementation scenario of the foregoing embodiment, the receiving, by the second network device, second information from the first network device includes: receiving, by the second network device, N pieces of second information from N first network devices, where N is a positive integer; and the receiving, by the second network device, third information from the first network device includes: receiving, by the second network device, M pieces of third information from M first network devices, where M is a positive integer, and the M first network devices belong to the N first network devices; and the determining, by the second network device, based on the third information, whether to send the clock-related information within the coverage area of the second network device in the RNA includes: when M is equal to N, the second network device does not send the clock-related information within the coverage area of the second network device in the RNA based on the third information.

The foregoing solution may be understood as follows: When each network device that has sent the second information sends the third information to the second network device, the second network device stops sending the clock-related information in the coverage area of the second network device in the RNA. In other words, if there is at least one network device that has sent the second information but does not send the third information to the second network device, the second network device continues to send the clock-related information in the coverage area of the second network device in the RNA.

That the M first network devices belong to the N first network devices may be understood as that the N first network devices include the M first network devices. In some optional embodiments, the N pieces of second information each include an identifier of one of the N first network devices and an identifier of one of the N coverage areas of the second network device, and the M pieces of third information each include an identifier of one of the M first network devices and an identifier of one of the M coverage areas of the second network device. The second network device determines, based on the third information, whether to send the clock-related information in the coverage area of the second network device in the RNA, where: when the identifiers of the N first network devices are all carried in the M pieces of third information, the second network device does not send the clock-related information in the coverage area of the second network device in the RNA based on the third information.

In other words, the process in which the second network device determines whether to send the clock-related information within the coverage area of the second network device in the RNA may be implemented by carrying and sending an identifier of the transmit end and an identifier of the impact area by using the second information, and by carrying and sending an identifier of the transmit end and an identifier of the impact area by using the third information.

According to the foregoing embodiment, when each network device that has sent the second information sends the third information to the second network device, the second network device stops sending the clock-related information within the coverage area of the second network device in the RNA, thereby reducing overheads.

Optionally, in another implementation scenario of the foregoing embodiment, the determining, by the second network device, whether to send the clock-related information within the coverage area of the second network device in the RNA based on the third information further includes: when M is less than N, sending, by the second network device, the clock-related information within the coverage area of the second network device in the RNA.

That M is less than N may be understood as that there is at least one network device that has sent the second information and that does not send the third information to the second network device.

According to the foregoing embodiment, when at least one network device that has sent the second information does not send the third information to the second network device, the second network device continues to send the clock-related information in the coverage area of the second network device in the RNA, thereby ensuring continuity of a clock-related service of a terminal device in an RNA whose coverage area includes the coverage area of the second network device.

Optionally, in another implementation scenario of the foregoing embodiment, the determining, by the second network device based on the third information, whether to send the clock-related information in the coverage area of the second network device in the RNA includes: when an RNA of a terminal device interested in the clock-related information and maintained by the second network device includes the coverage area of the second network device, sending, by the second network device, the clock-related information in the coverage area of the second network device in the RNA.

In other words, if the RNA of the terminal device maintained by the second network device itself includes the cell 1, the second network device still sends the clock-related information within the coverage area of the second network device in the RNA, to ensure continuity of a clock-related service of the terminal device maintained by the second network device.

Optionally, in another implementation scenario of the foregoing embodiment, the receiving, by the second network device, second information from the first network device includes: receiving, by the second network device, at least N pieces of second information from N first network devices, where N is a positive integer; and the receiving, by the second network device, third information from the first network device includes: receiving, by the second network device, at least M pieces of third information from M first network devices, where M is a positive integer, and the M first network devices belong to the N first network devices. The determining, by the second network device, whether to send the clock-related information within the coverage area of the second network device in the RNA based on the third information includes: when M is equal to N, and after the second network device receives target third information from at least M pieces of third information, and the second network device receives target second information from at least N pieces of second information, the second network device sends the clock-related information within the coverage area of the second network device in the RNA based on the third information, where the target third information and the target second information are from a same first network device.

The foregoing solution may be understood as follows: If a network device sequentially sends the second information, the third information, and the second information to the second network device, the second network device may continue to send the clock-related information in the coverage area of the second network device in the RNA. On the other hand, if each network device that has sent the second information has sent the third information and does not send the second information again after sending the third information, the second network device may stop sending the clock-related information in the coverage area of the second network device in the RNA.

Optionally, in another implementation scenario of the foregoing embodiment, when the second network device receives the second information from the first network device, the first network device is in the first state; and when the second network device receives the third information from the first network device, the first network device is in the second state; where the second network device determines, based on the third information, whether to send the clock-related information in the coverage area of the second network device in the RNA, the second network device does not send the clock-related information in the coverage area of the second network device in the RNA when all the first network devices are in the second state; or the second network device sends the clock-related information in the coverage area of the second network device in the RNA when at least one of the first network devices is in the first state.

The first state may be understood as that an RNA range configured for an inactive terminal device interested in the clock-related information and maintained by the first network device includes the coverage area of the second network device; and the second state may be understood as that an RNA range configured for an inactive terminal device interested in the clock-related information and maintained by the first network device does not include the coverage area of the second network device.

Optionally, in another implementation scenario of the foregoing embodiment, the sending, by the first network device, third information to the second network device includes: after the terminal device enters the connected mode or the idle mode, or after the first network device deletes or migrates the context of the terminal device, or after the first network device learns that the terminal device is within the coverage area of the first network device, sending, by the first network device, the third information to the second network device.

The first network device may transfer the terminal device to the connected state or the state mode. In a case where the terminal device is transferred to the connected state, if the terminal device needs to leave the coverage area of the first network device and enter the coverage area of another network device, a handover process is performed, where a network device of a new serving cell provides the clock-related information, so that the terminal device does not enter the coverage area of the second network device without being known to the second network device. In a case where the terminal device is transferred to the idle state, the terminal device may move within the coverage areas of the network devices, and the probability that the terminal device appears in the coverage area of the second network device is relatively low. Therefore, after the terminal device enters the connected state or the idle state, the first network device sends the third information to the second network device, thereby reducing overheads of the second network device.

The first network device may delete the context of the terminal device when it determines that an abnormal situation has occurred (for example, the terminal device has not initiated a periodic RNA-U procedure for a long time). In this case, even if the second network device sends clock-related information within the coverage area of the second network device, clock synchronization may still fail due to the abnormality of the terminal device. Therefore, after the first network device deletes the context of the terminal device, it may send the third information to the second network device to reduce the overhead of the second network device.

The first network device may migrate the context of the terminal device to another network device. It can be understood that after this, the first network device no longer functions as the anchor base station for the terminal device, and the network device that receives the context of the terminal device becomes the new anchor base station. The new anchor base station will determine a new RNA, which may not include the coverage area of the second network device. Alternatively, the new anchor base station may perform the method provided in this application, and if the new RNA also includes the coverage area of the second network device, the new anchor base station may send the second information to the second network device. Therefore, after the first network device migrates the context of the terminal device to another network device, the terminal device may no longer exist within the coverage area of the second network device, or whether the second network device sends clock-related information may be indicated by another network device.

That the first network device learns that the terminal device is within the coverage area of the first network device indicates that the terminal device is not within the coverage area of the second network device, and the second network device does not need to send the clock-related information to the terminal device that may not exist in the coverage area of the second network device.

Optionally, in another implementation scenario of the foregoing embodiment, the method 300 further includes: determining, by the first network device, that the terminal device is within the coverage area of the first network device based on at least one of the following: the first network device performs small data transmission (small data transmission, SDT) with the terminal device; or the first network device receives location information of the terminal device, where the location information indicates that the terminal device is within the coverage area of the first network device.

When the first network device performs an SDT procedure with the terminal device, the first network device may determine that the terminal device is within the coverage area of the first network device.

Furthermore, if the first network device determines that all terminal devices interested in the clock-related information and that have coverage areas including the second network device have initiated the SDT process, the first network device may determine that none of the terminal devices camps on the coverage area of the second network device. Therefore, the first network device may indicate, by using the third information, the second network device to not send the clock-related information within the coverage area of the second network device.

This application does not limit a message carried by the location information, and the location information may be carried in any message. This application does not limit a name of the location information, and the location information may also be referred to as indication information or have another name.

Optionally, in another implementation scenario of the foregoing embodiment, S220 includes: after the first network device terminates the small data transmission of the terminal device, sending, by the first network device, the second information to the second network device.

After the SDT process is terminated, the first network device may determine that not all terminal devices interested in the clock-related information and that have coverage areas including the coverage area of the second network device camp on the first network device. In other words, the first network device may determine that there are some terminal devices interested in the clock-related information and that have coverage areas including the coverage area of the second network device but that do not camp on the first network device.

FIG. 4 is a schematic flowchart of another communication method 400 according to an embodiment of this application. In the method 400, when an interested inactive UE newly added or reduced by an NE maintained by a base station, the base station may send an indication message to a neighboring base station, indicating that an RNA of an interested inactive UE includes the neighboring base station (corresponding to the second information), or an RNA without an interested inactive UE includes the neighboring base station (corresponding to the third information). The method 400 may be combined with method 300. The following describes method 400 with reference to FIG. 4.

S410: The gNB1 obtains information about UEs interested in clock-related information.

The gNB1 may obtain that a UE in a connected state is interested in clock-related information. The clock-related information includes timing information and/or time synchronization status information. For example, the gNB1 may obtain from a core network element (or referred to as a core network node), a neighboring gNB, or the UE whether the UE in the connected state is interested in the clock-related information. For details, refer to the related descriptions of S310, which are not described in detail herein.

It should be noted that when the UE is in the connected state, the serving base station provides the UE with clock-related information.

S420: The gNB1 sends the first information to the UE.

The first information may indicate an RNA. The first information may indicate the UE to enter the inactive state. For other descriptions of the first information, refer to the foregoing, and details are not repeated herein. The following uses an example where the RNA includes coverage areas of gNB1, gNB2, and gNB3 for description.

S430: The gNB1 sends second information to the gNB2 and the gNB3.

The following will describe using gNB2 as an example, and the description of gNB3 is similar to that of gNB2. For the description of gNB3, please refer to the description of gNB2, and no further details will be provided here.

When gNB1 begins to function as an anchor base station for an Inactive UE interested in clock-related information, gNB1 may determine whether the RNA configured for the Inactive UE includes at least one cell of gNB2 that is not within the RNA of an existing Inactive UE interested in clock-related information that is maintained by gNB1. If this is the case (i.e., the RNA configured for the Inactive UE includes at least one cell of gNB2 that is not within the RNA of an existing Inactive UE interested in clock-related information that is maintained by gNB1), then gNB1 sends second information to the aforementioned gNB2, indicating that the RNA of at least one Inactive UE interested in clock-related information, which uses gNB1 as the anchor base station, encompasses (part of) the coverage area of gNB2.

The second information may include an identifier of gNB1 and the affected area (or referred to as RNA area) of gNB2. The affected area of gNB2 includes information about the cells under gNB2 that are within the RNA area of the Inactive UE interested in the clock-related information that is maintained by gNB1. For example, the affected area of gNB2 may be an identifier of at least one cell or an identifier of at least one RAN area.

Optionally, the second information may further include the first flag and/or the first identifier. The first flag may be referred to as a flag field 1, indicating that the affected area of gNB2 is the newly added area, that is, indicating that the affected area of gNB2 is within the RNA of an Inactive UE for which gNB1 is interested and which has been configured under gNB1. The first identifier may indicate the clock information of interest to the UE. For further descriptions of the second information and the information included in the second information, refer to the foregoing descriptions, and details are not repeated herein.

When at least one of the following events occurs, gNB1 begins to function as an anchor base station for an Inactive UE interested in the clock-related information.
(1) The gNB1 releases a connected UE to the inactive state, and the connected UE is interested in the timing information.
(2) The gNB1 obtains the context of an Inactive UE from another gNB, and the gNB1 sends an RRCRelease message to the UE to keep the UE in the inactive state, where the Inactive UE is interested in the timing information.

S440: The gNB1 sends third information to the gNB2 and the gNB3.

The following uses gNB2 as an example for description, and the description of gNB3 is similar to that of gNB2. For the description of gNB3, reference may be made to the description of gNB2, and no further details will be provided.

When gNB1 no longer serves as an anchor base station for an Inactive UE that is interested in clock-related information, gNB1 may determine whether the RNA configured for the Inactive UE does not include at least one cell of gNB2, where the cell is not within the RNA range of an existing interested Inactive UE maintained by gNB1. If this is the case (i.e., the RNA configured for the Inactive UE does not include at least one cell of gNB2, where the cell is not within the RNA range of an existing interested Inactive UE maintained by gNB1), then gNB1 sends third information to the aforementioned gNB2, indicating that (a part of) the coverage area of gNB2 no longer belongs to the RNA of the Inactive UE interested in clock-related information that is maintained by gNB1.

The third information may include an identifier of gNB1 and the affected area (or referred to as the RNA area) of gNB2. The affected area of gNB2 includes information about cells whose RNA no longer belongs to the Inactive UEs interested in the clock-related information that are maintained by gNB1. For example, the affected area may be an identifier of at least one cell or an identifier of at least one RAN area. Optionally, the third information may further include a second flag. The second flag may be the flag field 2, indicating that the affected area of gNB2 is a reduced area, meaning that the indicated affected area of gNB2 is no longer configured within the RNA of the Inactive UEs interested in the clock-related information under gNB1. For further descriptions of the third information and the information contained therein, refer to the foregoing descriptions, and no further details will be provided here.

The gNB1 ceases to function as an anchor base station for an Inactive UE interested in the clock-related information when at least one of the following events occurs.
(1) The gNB1 transfers the context of the UE to another gNB.
(2) The gNB1 transitions the UE from the inactive state to the connected state or idle state.
(3) The gNB1 deletes the context of the UE, for example, when some abnormal situations occur (for example, the UE does not initiate a periodic RNA-U procedure for a long time).

S450: The gNB2 and the gNB3 determine whether to send the clock-related information.

It should be noted that S450 is an optional step in the method 400. In other words, the method 400 may not include S450. The following uses the gNB2 as an example for description, and a description of the gNB3 is similar to that of the gNB2. For a description of the gNB3, refer to the description of the gNB2, and details are not described again.

In some optional embodiments, the gNB 2 maintains, at a cell granularity, whether a cell belongs to an RNA of an inactive UE interested in the clock-related information. For example, the gNB 2 may determine, based on the second information and the third information received from the neighboring gNB and the RNA of the inactive UE interested in the clock-related information that is maintained by the gNB 2 itself, whether a cell served by the gNB 2 belongs to the RNA of the inactive UE interested in the clock-related information.

If a cell belongs to the RNA of the interested inactive UE, the gNB 2 may broadcast the SIB 9 in the cell, indicating the 5G clock information and/or the clock status synchronization indication information (for example, by indicating an event identifier).

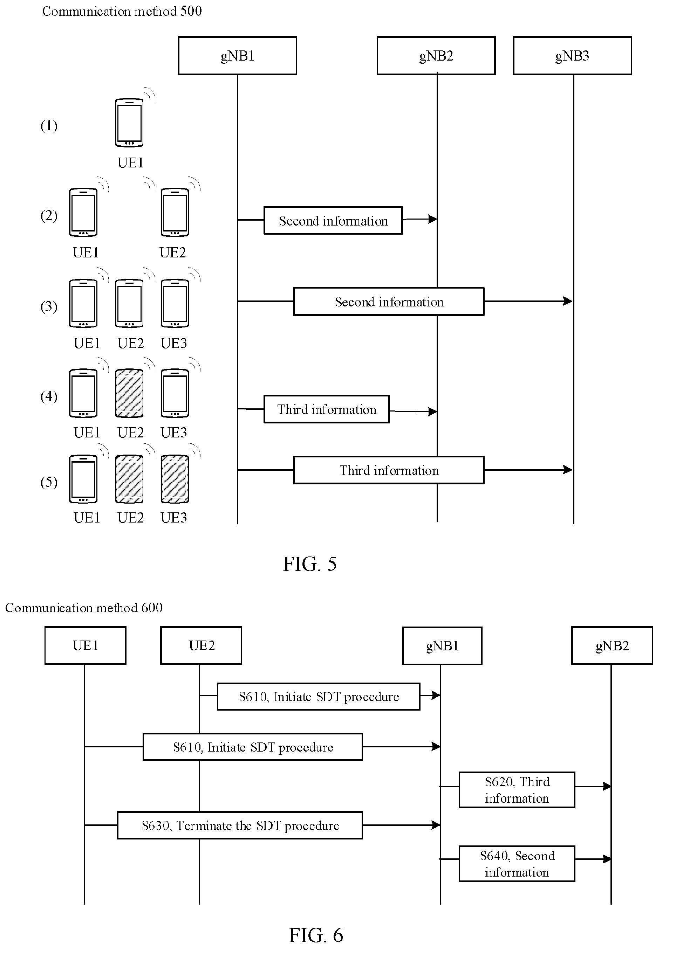

FIG. 5 is a schematic flowchart of still another communication method 500 according to an embodiment of this application. The method 500 is an example of the method 300 and the method 400, and does not constitute a limitation on this application. The method 500 includes case (1) to case (5). The following describes the method 500 with reference to FIG. 5.

Before the occurrence of case (1), it is assumed that none of gNB1 to gNB3 maintains an Inactive UE interested in the timing information. The connected UEs UE1, UE2, and UE3 served by gNB1 are interested in the timing information.

Case (1): gNB1 releases UE1 into the inactive state. The RNA configured for UE1 includes the coverage area of gNB1 but does not include the coverage areas of gNB2 and gNB3. gNB1 does not need to send second or third information to the neighboring gNBs.

In case (1), gNB1 may broadcast an SIB9 message to provide the timing information. Neither gNB2 nor gNB3 maintains an Inactive UE interested in the timing information, and no other gNB maintains an RNA for an Inactive UE interested in the timing information that includes the coverage area of gNB2 or gNB3. Therefore, gNB2 and gNB3 do not need to broadcast an SIB9 message.

Case (2): The gNB1 releases the UE2 into an inactive state. The RNA configured for the UE1 includes the coverage areas of the gNB1 and the gNB2, but does not include the coverage area of the gNB3. The gNB1 may determine that the coverage area of the gNB2 does not belong to the RNA of an existing inactive UE interested in the clock-related information, and therefore, the gNB1 sends the second information to the gNB2.

In case (2), the gNB1 and the gNB2 broadcast the SIB9 message to provide the clock-related information. The gNB3 does not need to broadcast the SIB9.

Case (3): The gNB1 releases the UE3 into an inactive state. The RNA configured for the UE1 includes the coverage areas of the gNB1, the gNB2, and the gNB3. The gNB1 may determine that the coverage area of the gNB2 belongs to the RNA of an existing inactive UE interested in the clock-related information, and therefore, the gNB1 does not send the second information to the gNB2. The gNB1 may determine that the coverage area of the gNB3 does not belong to the RNA of an existing inactive UE interested in the clock-related information, and therefore, the gNB1 sends the second information to the gNB3.

In case (3), the gNB, gNB2, and gNB3 broadcast SIB9 messages to provide the clock-related information.

Case (4): UE2 transitions to a connected state (indicated by shading in Figure 5), and the gNB1 determines that the RNA of the currently inactive UEs (i.e., UE1 and UE3) that are interested in the clock-related information includes the original RNA range of UE2, so the gNB1 does not need to send the third information to the gNB2 or the gNB3. Alternatively, the gNB1 determines that the coverage areas of the gNB2 and the gNB3 are within the RNA of other existing terminal devices (i.e., UE1 and UE3) maintained by the gNB1, for example, within the RNA of UE3, so the gNB1 does not need to send the third information to the gNB2 or the gNB3.

In case (4), the gNB, gNB2, and gNB3 broadcast SIB9 messages to provide the clock-related information.

Case (5): UE3 transitions to a connected state, and the gNB1 determines that the coverage areas of the gNB2 and the gNB3 no longer belong to the RNA of the currently inactive UEs (i.e., UE1 and UE3) that are interested in the clock-related information maintained by the gNB1, so the gNB1 sends the third information to the gNB2 and the gNB3.

In case (5), gNB1 broadcasts the SIB9 message to provide the timing information. Neither gNB2 nor gNB3 maintains an Inactive UE interested in the timing information, and no other gNB maintains an RNA of an Inactive UE interested in the timing information that includes the coverage area of gNB2 or gNB3. Therefore, gNB2 and gNB3 do not need to broadcast the SIB9 message.

This application also provides another communication method, which includes: when a network device starts broadcasting the timing information, the network device sends first indication information to a neighboring network device, where the first indication information may be used to indicate that the network device has started broadcasting the timing information. When the network device stops broadcasting the timing information, the network device sends second indication information to the neighboring network device, where the second indication information may be used to indicate that the network device has stopped broadcasting the timing information. In this way, when the network device determines that the neighboring network device is affected, that is, when the RNA of the Inactive UE interested in the timing information and maintained by the network device includes the coverage area of the neighboring network device, the network device may determine, based on the first indication information, that the neighboring network device has already started broadcasting the timing information, thereby eliminating the need to send second information to the neighboring network device. For example, when gNB1 sends second information to an affected gNB, the gNB1 excludes the gNB known to already be broadcasting the timing information.

FIG. 6 is a schematic flowchart of yet another communication method 600 according to an embodiment of this application. In the method 600, if a base station determines that all inactive UEs interested in the clock-related information within the coverage area of a neighboring base station are included in the RNA configured by the base station and have initiated the SDT process, the base station may send a third message to the neighboring base station. The method 600 may be combined with method 300, 400, or 500. The following describes method 600 with reference to FIG. 6.

Before method 600 is performed, it is assumed that the RNA of both Inactive UE1 and Inactive UE2, which are interested in the timing information and are maintained by gNB1, each include the coverage area of gNB2, and there are no other Inactive UEs under the interest of gNB1 whose RNA includes the coverage area of gNB2. gNB1 has already sent second information to gNB2, instructing gNB2 to transmit the timing information within its coverage area.

S610: Inactive UE 1 and Inactive UE 2 initiate an SDT procedure to gNB 1.

S620: gNB 1 sends third information to gNB 2.

In some embodiments, gNB 1 may determine that all inactive UEs interested in the clock-related information and which are within the coverage area of gNB 2 and have initiated the SDT procedure or are in the SDT procedure have done so. Therefore, gNB 1 may determine that none of the inactive UEs interested in the clock-related information and which are within the coverage area of gNB 2 have camped on the coverage area of gNB 2. Consequently, gNB 1 may send the third information to gNB 2. The third information may indicate that none of the inactive UEs interested in the clock-related information and which are maintained by gNB 1 have camped on the coverage area of gNB 2. Therefore, gNB 2 may not need to send the clock-related information within its coverage area.

S630, Inactive UE1 terminates the SDT procedure.

S640, gNB1 sends second information to gNB2.

In some embodiments, gNB1 may determine that not all Inactive UEs within the RNA that are interested in clock-related information are currently in the SDT process (for instance, UE1 has terminated the SDT process and is no longer in it). Therefore, gNB1 may send second information to gNB2, indicating that the Inactive UEs interested in the clock-related information that are maintained by gNB1 may camp on gNB2. Consequently, gNB2 may send the clock-related information within its coverage area.

Optionally, in method 600, the gNB2 is not the new serving gNB from which the Inactive UE initiates the SDT procedure.

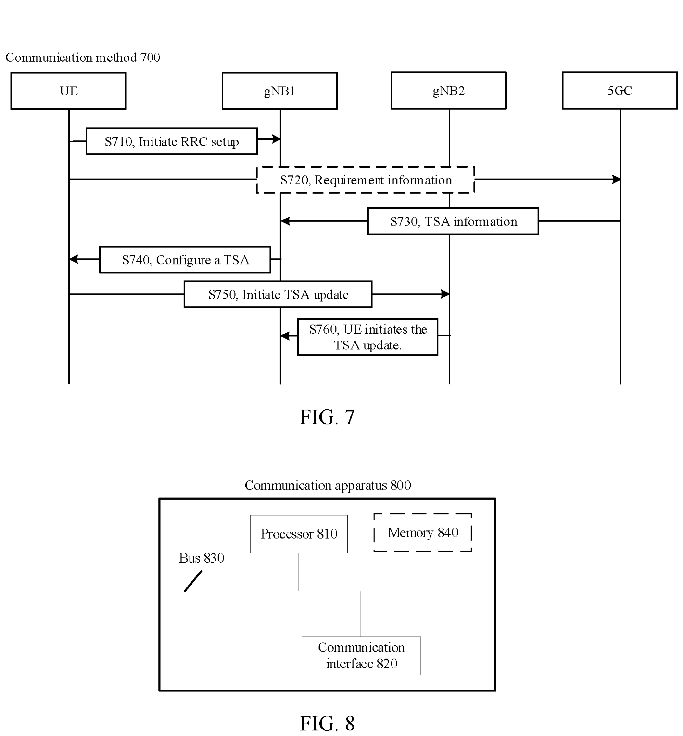

FIG. 7 is a schematic flowchart of yet another communication method 700 according to an embodiment of this application. In the method 700, a base station may configure a time synchronization coverage area (time sync coverage area, TSA) for UE, and introduce a TSA update (updated) process. The method 700 may be combined with any of the foregoing methods. The following describes the method 700 with reference to FIG. 7.

S710: The UE initiates an RRC setup (setup) to the gNB 1.

After initiating the RRC setup, the UE is a connected UE.

S720: The UE sends requirement information to a 5G core network (5G core network, 5GC).

The requirement information may indicate whether the UE has a need to configure a TSA. The requirement information may also be referred to as indication information or have another name. It should be noted that S720 is an optional step in the method 700, that is, the method 700 may not include S720.

S730: The 5GC sends TSA information to the gNB 1.

The aforementioned S730 may also be understood as the base station (gNB1) obtaining the TSA information of the UE from the core network element. The TSA may indicate a RAN area where the UE needs to obtain clock-related information. The TSA may include the coverage of at least one cell under at least one base station.

In some optional embodiments, when the UE performs a handover, the source station may forward the TSA information to the target station, or the core network element may send the TSA information to the target station.

In some optional embodiments, the core network element configures the TSA information for the base station side only when the core network element learns that the UE has a need to configure the TSA.

S740: The gNB1 configures a TSA for the UE.

For example, when the gNB1 transfers the UE to the inactive state, it may configure a TSA in the RRCRelease message, where the TSA may be different from the configured RNA.

S750: The UE may initiate a TSA update procedure to gNB2.

For example, when the UE moves out of the TSA range configured by gNB1, the UE may initiate a TSA update procedure to a new serving base station (i.e., gNB2). Alternatively, the UE may notify the new serving base station of the UE's movement out of the TSA range by initiating an RRC resume procedure in the camped cell. The RRCResumeRequest message may include a cause value (cause value), which may indicate that the UE initiates a TSA update procedure.

S760: gNB2 notifies gNB1 that the UE initiates the TSA update procedure.

In other words, the new serving base station may send indication information to the serving base station last accessed by the UE, where the indication information indicates that the UE has initiated a TSA update procedure. Furthermore, in some optional embodiments, the serving base station last accessed by the UE (i.e., gNB1) may migrate the context of the UE to the new serving base station (i.e., gNB2).

It should be noted that the foregoing method may be combined with the method 700. For example, the RNA in the foregoing method may be replaced with the TSA.

According to the foregoing embodiment, the TSA may be decoupled from the RNA on the air interface side, and the RAN network may set the RNA and the TSA on demand, thereby improving flexibility of configuration on the RAN side.

The following describes an apparatus embodiment corresponding to the method embodiments of this application. The following briefly describes the apparatus, and for specific implementation steps and details of the solution, refer to the foregoing method embodiments.

To implement the functions in the methods provided in this application, the communication apparatus may include a hardware structure and/or a software module, and implement the foregoing functions in a form of the hardware structure, the software module, or a combination of the hardware structure and the software module. Whether a function in the foregoing functions is performed through the hardware structure, the software module, or the combination of the hardware structure and the software module depends on particular applications and design constraints of the technical solutions.

FIG. 8 is a schematic block diagram of a communication apparatus 800 according to an embodiment of this application. The communication apparatus 800 includes a processor 810 and a communication interface 820, and the processor 810 and the communication interface 820 may be connected to each other through a bus 830. The communication apparatus 800 may be the first network device, or may be the second network device.

Optionally, the communication apparatus 800 may further include a memory 840. The memory 840 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM), and the memory 840 is configured to store related instructions and data. The memory 840 may be integrated with the processor 810, or may be disposed separately.

The processor 810 may be one or more central processing units (central processing unit, CPU). When the processor 810 is a CPU, the CPU may be a single-core CPU or a multi-core CPU. The processor 810 may be a signal processor, a chip, or another integrated circuit that can implement the method in this application, or may be a part of the foregoing processor, chip, or integrated circuit that is configured to perform a processing function. In addition, the communication interface 820 may also be an input/output interface, where the input/output interface is configured to input or output a signal or data, or may be an input/output circuit.

For example, when the communication apparatus 800 is the first network device, the processor 810 is configured to perform the following operations: sending first information to a terminal device interested in the clock-related information; and sending second information to the second network device.

The foregoing content is merely an example for description. The communication apparatus 800 is responsible for performing the method or steps related to the first network device in the foregoing method embodiments.

For example, when the communication apparatus 800 is the second network device, the processor 810 is configured to perform the following operations: receiving second information from the first network device; and sending the clock-related information based on the second information.

The foregoing content is merely an example for description. The communication apparatus 800 is responsible for performing the method or steps related to the second network device in the foregoing method embodiments.

It may be understood that the communications interface 820 may also be referred to as a transceiver. The transceiver may include a transmitter and a receiver, where the transmitter is configured to perform a sending operation, and the receiver is configured to perform a receiving operation. For example, the processor 810 is configured to control the transceiver to receive and/or send a signal.

It should be noted that the communication apparatus 800 may include a transmitter but not a receiver. Alternatively, the communication apparatus 800 may include a receiver, but not a transmitter. Specifically, it may depend on whether the foregoing solution executed by the communication apparatus 800 includes the sending action and the receiving action.

The foregoing description is exemplary only. For specific content, reference may be made to the content shown in the foregoing method embodiment. For implementation of the operations in FIG. 8, refer to corresponding descriptions in the method embodiments shown in FIG. 3 to FIG. 7.

For example, the communication apparatus 800 may be configured to perform the solutions shown in FIG. 3 to FIG. 7.

When the communication apparatus 800 is the first network device, the communications interface 820 may be configured to send the first information to a terminal device interested in the clock-related information, and send the second information to the second network device.

When the communication apparatus 800 is the second network device, the communications interface 820 may be configured to receive second information from the first network device, and send the clock-related information based on the second information.

For other implementations, refer to the detailed descriptions of the embodiments shown in FIG. 3 to FIG. 7. Details are not described herein again. It should be understood that a specific process in which each component performs the foregoing corresponding process has been described in detail in the foregoing method embodiments, and for brevity, details are not described herein again.

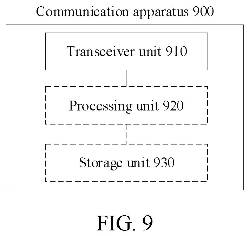

FIG. 9 is a schematic block diagram of another communication apparatus 900 according to an embodiment of this application. The communication apparatus 900 may be a first network device or a second network device, or may be a chip or a module in the first network device or the second network device, and is configured to implement the method in the embodiments shown in FIG. 3 to FIG. 7. For details, refer to the related descriptions in the foregoing method embodiments.

The communication apparatus 900 includes a transceiver unit 910. The following provides an example for describing the transceiver unit 910.

The transceiver unit 910 may include a sending unit and a receiving unit. The sending unit is configured to perform a sending action of the communication apparatus 900, and the receiving unit is configured to perform a receiving action of the communication apparatus 900. For ease of description, the sending unit and the receiving unit are combined into one transceiver unit in the embodiments of this application. This is a unified description, and details are not described in the following. The transceiver unit 910 may implement a corresponding communication function. The transceiver unit 910 may also be referred to as a communication interface or a communication module.

It should be noted that the communication apparatus 900 may include a sending unit but not a receiving unit. Alternatively, the communication apparatus 900 may include a receiving unit but not a sending unit. Specifically, it may depend on whether the foregoing solution executed by the communication apparatus 900 includes a sending action and a receiving action.

For example, the transceiver unit 910 is configured to send first information and the like to a terminal device interested in clock-related information.

Optionally, the communication apparatus 900 may further include a processing unit 920, configured to perform content of the first network device related to steps such as processing and coordination.

For example, the transceiver unit 910 is configured to receive second information and the like from the first network device.

Optionally, the communication apparatus 900 may further include a processing unit 920, configured to perform content of the second network device related to steps such as processing and coordination.

The foregoing content is merely provided as an example description. The communication apparatus 900 is responsible for performing the methods or steps related to the first network device or the second network device in the foregoing method embodiments.

Optionally, the communication apparatus 900 further includes a storage unit 930, where the storage unit 930 is configured to store a program or code for performing the foregoing method. Alternatively, the storage unit 930 may be configured to store instructions and/or data, and the processing unit 920 may read the instructions and/or the data in the storage unit 930, so that the communication apparatus 900 implements the foregoing method embodiments. For example, the communication apparatus 900 may be configured to perform the solutions shown in FIG. 3 to FIG. 7.

When the communication apparatus 900 is the first network device, the processing unit 920 may be configured to send the first information to a terminal device interested in the clock-related information; and send the second information to the second network device.

When the communication apparatus 900 is the second network device, the processing unit 920 may be configured to receive the second information from the first network device; and send the clock-related information based on the second information.

For other implementations, refer to the detailed descriptions of the embodiments shown in FIG. 3 to FIG. 7. Details are not described herein again. It should be understood that a specific process in which each component performs the foregoing corresponding process has been described in detail in the foregoing method embodiments, and for brevity, details are not described herein again.

The apparatus embodiments shown in FIG. 8 and FIG. 9 are used to implement the content described in FIG. 3 to FIG. 7. For specific execution steps and methods of the apparatuses shown in FIG. 8 and FIG. 9, refer to the content described in the foregoing method embodiments.

This application further provides a communication apparatus, including a processor and a memory, where the memory is configured to store an instruction, and the processor is configured to invoke and run the instruction stored in the memory, so that the communication apparatus performs the method in the foregoing embodiments.

This application further provides a chip, including a processor, configured to invoke an instruction stored in a memory and run the instruction stored in the memory, so that a communication apparatus on which the chip is installed performs the method in the foregoing embodiments.

This application further provides another chip, including an input interface, an output interface, and a processor, where the input interface, the output interface, and the processor are connected through an internal connection path; and the processor is configured to execute code in a memory, where when the code is executed, the processor is configured to perform the method in the foregoing embodiments. Optionally, the chip further includes a memory, and the memory is configured to store a computer program or code.

This application further provides a processor, configured to be coupled to a memory, and configured to perform the method and function of the communication apparatus in any one of the foregoing embodiments.

In another embodiment of this application, a computer program product that includes a computer program or instructions is provided. When the computer program or the instructions is/are run on a computer, the method in the foregoing embodiments is implemented.

This application further provides a computer program. When the computer program is run on a computer, the methods in the foregoing embodiments are implemented.

In another embodiment of this application, a computer-readable storage medium is provided. The computer-readable storage medium stores a computer program, and when the computer program is executed by a computer, the methods in the foregoing embodiments are implemented.

This application further provides a communications system, including a first network device and a second network device, where the first network device is configured to perform an action performed by the first network device in the foregoing method, and the second network device is configured to perform an action performed by the second network device in the foregoing method.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described systems, apparatuses, and units, refer to a corresponding process in the foregoing method embodiments, and details are not described herein again.

In the embodiments provided in this application, it should be understood that the disclosed systems, apparatuses, and methods may be implemented in other ways. For example, the foregoing apparatus embodiments are merely examples. For example, the division of the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected according to an actual need to achieve the objectives of the solutions in embodiments.

In addition, functional units in embodiments of this application may be integrated into one processing unit, each of the units may exist physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The storage medium mentioned above includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be determined according to the protection scope of the claims.

## Claims

1. A communication method, comprising:
sending, by a first network device, first information to a terminal device interested in clock-related information, wherein the first information indicates a radio access network notification area RNA, the RNA comprising a coverage area of the first network device and a coverage area of a second network device;
sending, by the first network device, second information to the second network device, wherein the second information instructs the second network device to send the clock-related information within the coverage area of the second network device.

2. The method according to claim 1, wherein the second information comprises an identifier of the first network device and/or an identifier of the coverage area of the second network device, wherein the identifier of the first network device is used to indicate that the coverage area of the second network device corresponds to the first network device.

3. The method according to claim 1 or 2, wherein the first information is further used to release the terminal device, so that the terminal device enters an inactive state.

4. The method according to any one of claims 1 to 3, further comprising:
sending, by the first network device, third information to the second network device, wherein the third information is used to instruct the second network device not to send the clock-related information within the coverage area of the second network device.

5. The method according to claim 4, wherein the third information comprises an identifier of the first network device and/or an identifier of the coverage area of the second network device.

6. The method according to claim 4 or 5, wherein the sending, by the first network device, the third information to the second network device comprises:
sending, by the first network device, the third information to the second network device after the terminal device enters a connected state or an idle state, or after the first network device deletes or migrates context of the terminal device, or after the first network device learns that the terminal device is within the coverage area of the first network device.

7. The method according to claim 6, further comprising:
determining, by the first network device, that the terminal device is within the coverage area of the first network device based on at least one of the following:
performing, by the first network device, small data transmission with the terminal device; or,
receiving, by the first network device, location information of the terminal device, wherein the location information indicates that the terminal device is within the coverage area of the first network device.

8. The method according to any one of claims 1 to 7, wherein the sending, by the first network device, the second information to the second network device comprises:
after the first network device terminates small data transmission of the terminal device, sending, by the first network device, the second information to the second network device.

9. A communication method, comprising:
receiving, by a second network device, second information from a first network device, wherein the second information is used to instruct the second network device to send clock-related information within a coverage area of the second network device in a radio access network notification area RNA;
sending, by the second network device, the clock-related information based on the second information.

10. The method according to claim 9, wherein the second information comprises an identifier of the first network device and/or an identifier of the coverage area of the second network device in the RNA, and the identifier of the first network device is used to indicate that the coverage area of the second network device corresponds to the first network device.

11. The method according to claim 9 or 10, wherein sending by the second network device the clock-related information based on the second information comprises:
sending, by the second network device, the clock-related information within the coverage area of the second network device in the RNA.

12. The method according to any one of claims 9 to 11, further comprising:
receiving, by the second network device, third information from the first network device, wherein the third information is used to instruct the second network device not to send the clock-related information within the coverage area of the second network device in the RNA.

13. The method according to claim 12, wherein the third information comprises an identifier of the first network device, and/or an identifier of the coverage area of the second network device in the RNA.

14. The method according to claim 12 or 13, further comprising:
determining, by the second network device based on the third information, whether to send the clock-related information within the coverage area of the second network device in the RNA.

15. The method according to claim 14, wherein the receiving, by the second network device, the second information from the first network device comprises:
receiving, by the second network device, N pieces of the second information from N first network devices, wherein N is a positive integer;
wherein the receiving, by the second network device, the third information from the first network device comprises:
receiving, by the second network device, M pieces of the third information from M first network devices, wherein M is a positive integer, and the M first network devices belong to the N first network devices;
wherein the determining, by the second network device based on the third information, whether to send the clock-related information within the coverage area of the second network device in the RNA comprises:
when M is equal to N, not sending, by the second network device based on the third information, the clock-related information within the coverage area of the second network device in the RNA.

16. The method according to claim 15, wherein the determining, by the second network device, whether to send the clock-related information in the coverage area of the second network device in the RNA based on the third information further comprises:
when M is less than N, sending, by the second network device, the clock-related information in the coverage area of the second network device in the RNA.

17. A communication apparatus, comprising a processing circuit and an input/output interface, wherein the input/output interface is configured to input and/or output a signal, and the processing circuit is configured to perform the method according to any one of claims 1 to 8, or the processing circuit is configured to perform the method according to any one of claims 9 to 16.

18. A communication apparatus, comprising a processor and a memory, wherein the memory stores a computer program or instructions, and the processor is configured to execute the computer program or the instructions, or to cause the communication apparatus to perform the method according to any one of claims 9 to 16.

19. A computer-readable storage medium, wherein the computer-readable storage medium stores a computer program or instructions, and when the computer program or the instructions are run on a computer, the method according to any one of claims 1 to 8 is performed, or the method according to any one of claims 9 to 16 is performed.

20. A computer program product, comprising a computer program or instructions, wherein when the computer program or the instructions are run, the method according to any one of claims 1 to 8 is implemented, or the method according to any one of claims 9 to 16 is implemented.

21. A communication system, comprising a first network device and a second network device, wherein the first network device is configured to perform the method according to any one of claims 1 to 8, and the second network device is configured to perform the method according to any one of claims 9 to 16.
